# FASCICULE DE BREVET EUROPEEN

(11) **EP 4 006 945 B1**
(45) Date de publication et mention de la délivrance du brevet: **11.09.2024**
(21) Numéro de dépôt: 21209653.1
(22) Date de dépôt: 22.11.2021
(51) Int. Cl.: H01H 85/36, H01H 85/02

(54) **SYSTÈME À AU MOINS UNE UNITÉ MOBILE**
SYSTEM MIT MINDESTENS EINER MOBILEN EINHEIT
SYSTEM WITH AT LEAST ONE MOBILE UNIT

(30) Priorité: 25.11.2020 FR 2012138
(43) Date de publication de la demande: 01.06.2022
(73) Titulaire: Commissariat à l'Energie Atomique et aux Energies Alternatives, 75015 Paris (FR)
(72) Inventeur: GAILLARD, Frédéric, 38054 GRENOBLE Cedex 09 (FR); CHATROUX, Daniel, 38054 GRENOBLE Cedex 09 (FR); CHAUVIN, Julien, 38054 GRENOBLE Cedex 09 (FR); DAUCHY, Julien, 38054 GRENOBLE Cedex 09 (FR); PERICHON, Pierre, 38054 GRENOBLE Cedex 09 (FR)
(74) Mandataire: Hautier IP

(56) Documents cités:
- EP-A1- 1 528 586
- WO-A1-2017/121498
- DE-A1- 102010 038 066
- US-A1- 2016 020 054

## Description

### DOMAINE TECHNIQUE

La présente invention concerne le domaine des systèmes comprenant des parties déconnectables automatiquement. Elle peut particulièrement s'appliquer à des dispositifs d'alimentation électrique comprenant au moins une unité de stockage d'énergie électrique, telle qu'une batterie. Elle trouve pour application particulièrement avantageuse le domaine de la fourniture d'énergie électrique pour des appareils alimentés par des batteries lithium-ion. Cependant, d'autres technologies d'unités, aptes à être déconnectées grâce à leur mobilité, sont concernées ; il peut par exemple s'agir de systèmes comprenant des unités ayant une fonction électrique autre que la seule fonction de stockage d'électricité. Par exemple, il peut s'agir de systèmes comportant un ou plusieurs moteurs électriques ou générateurs électriques.

### ETAT DE LA TECHNIQUE

Une multitude d'appareils est alimentée électriquement par des dispositifs d'alimentation électrique comprenant des unités de stockage d'énergie électrique, telles que des batteries, et notamment des batteries lithium-ion. Lors de la vie d'un appareil, des défauts de fonctionnement des unités de stockage peuvent survenir. Une unité de stockage peut plus particulièrement subir une surchauffe, voire un emballement thermique, durant lesquels la température de l'unité s'élève anormalement. Un risque est alors de propager le défaut de fonctionnement dans le dispositif d'alimentation électrique, par exemple de l'unité de stockage à d'autres unités, voire au reste de l'appareil.

Afin de limiter cela, il existe des dispositifs d'alimentation électrique visant à isoler électriquement l'unité de stockage lors d'un défaut de fonctionnement. Il est notamment connu de l'état de la technique, des dispositifs fusibles dans lesquels chaque unité de stockage est reliée à un jeu de barres par un fil fusible. Lorsqu'un fil fusible dépasse une température-seuil prédéterminée suite à un niveau de courant excessif, le fil fusible fond et déconnecte électriquement l'unité de stockage correspondante du jeu de barres.

Par ailleurs, différents systèmes de commutation électrique permettent d'isoler électriquement une unité de stockage défectueuse, par le biais d'actionneurs électroniques ou électromagnétiques. Il est notamment connu de l'état de la technique des dispositifs d'alimentation électrique dans lesquels un actionneur électromagnétique présente une configuration de connexion électrique de l'unité de stockage et une configuration de déconnexion électrique de l'unité de stockage. Le passage de la configuration de connexion à la configuration de déconnexion de l'actionneur peut être activé par la température, par exemple lors d'une surchauffe de l'unité de stockage. L'actionneur a un effet sur un pack d'unités de stockage, si bien que lorsqu'une cellule est défectueuse, une pluralité d'entre elles est systématiquement désactivée. Et cela implique des capteurs de température pénalisants en termes de coût et forcément limités en termes de finesse de détection, car forcément localisés.

Ces dispositifs restent en pratique limités pour freiner la propagation d'un défaut de fonctionnement.

Le document DE 10 2010 038066 A1 divulgue par exemple un dispositif de protection contre les surcharges thermiques dans lequel la déconnexion électrique est assurée par la présence de joints de soudure conducteurs fondant lorsque qu'ils dépassent une température seuil, à savoir leur température de fusion. La fonction de conduction et de déconnexion électrique est donc assurée par la même pièce, ce qui présente des inconvénients. En particulier, le passage du courant dans ces éléments peut fortement augmenter la température locale, provoquer la fusion des joints de soudure et donc la déconnexion électrique à une température inférieure à la température que l'utilisateur souhaiterait, typiquement une température comprise entre la température de surchauffe et la température d'emballement thermique de l'unité de stockage.

D'une manière générale, il existe un besoin pour améliorer la déconnexion d'une unité relativement à son support quand des conditions de température limites sont dépassées.

Un objet de la présente invention est donc de proposer un système, notamment pour l'alimentation électrique, mais pas seulement, améliorant la déconnection d'une unité lors d'un défaut de fonctionnement qui se traduit par une élévation de température au-delà d'une température-seuil.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un premier aspect on prévoit un système selon la revendication 1.

Grâce au déplacement relatif de l'unité et du support, le système déconnecte l'unité, en ce sens qu'il éloigne l'unité de ses éléments de solidarisation au support. Cette déconnexion peut être à vocation électrique et/ou au moins partiellement thermique.

Dans le cas d'accumulateurs, un défaut de fonctionnement d'une unité, par exemple une surchauffe ou un emballement thermique, peut se propager notamment par conduction thermique, et/ou par les raccords électriques par exemple entre des unités de stockage d'électricité d'un même étage. En outre, si une unité de stockage reste en fonctionnement lors d'un défaut de fonctionnement, des gaz pouvant être à plusieurs centaines de degrés Celsius peuvent être éjectés de l'unité et se propager pour attaquer d'autres unités de stockage.

Le déplacement relatif de l'unité peut d'une part réduire sa connexion thermique avec le support. Ainsi, la propagation de l'échauffement de l'unité dans le dispositif d'alimentation, et notamment aux autres unités de stockage, est limitée. Le risque d'un emballement thermique généralisé à plusieurs unités de stockage peut donc être minimisé, voire évité.

D'autre part, lors du déplacement relatif, l'unité de stockage peut être déconnectée électriquement du support. Le fonctionnement de l'unité peut ainsi être stoppé lors d'une surchauffe, voire d'un emballement thermique.

De préférence, dans la deuxième position, l'au moins une unité est dans un état de moindre connexion thermique avec le support, et l'au moins une unité n'est pas raccordée électriquement au support. Ainsi, de façon synergique entre déconnexion thermique et électrique, les principaux vecteurs de propagation d'un défaut de fonctionnement dans le dispositif, voire dans l'appareil le comprenant, sont coupés.

Un autre aspect concerne un appareil comprenant au moins un système selon le premier aspect. Le système peut être un système d'alimentation électrique et l'appareil l'intégrant peut comporter au moins un organe alimenté électriquement par le système.

Dans un cas avantageux, le dispositif de rétention est aussi configuré pour s'opposer à la gravité de l'unité dans une position de l'appareil dans laquelle l'unité est dans la première position ; par exemple, l'unité peut être dirigée avec une composante verticale non nulle lors de l'utilisation de l'appareil, et le dispositif de rétention sert aussi à contrer la gravité dans cette configuration. Dans le cas d'un véhicule électrique terrestre, la position d'utilisation correspond à une position de roulage. Dans le cas d'un véhicule électrique aérien, elle correspond à une position de vol. Globalement, l'appareil équipé, notamment un véhicule, présentera avantageusement une situation d'utilisation dans laquelle le dispositif de rétention s'oppose au poids de l'unité.

Un autre aspect de l'invention concerne un procédé de déconnexion d'une unité dans un système. Au-delà d'une température de fusion d'un élément fusible, on libère un blocage de mouvement opéré jusqu'alors par un dispositif de rétention de sorte à autoriser un déplacement de l'unité depuis une première position grâce à la poussée d'un dispositif élastiquement déformable précontraint dans la première position.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 selon un exemple de réalisation de l'invention suivant une première option.
La figure 2 représente une autre variante de réalisation.
La figure 3 représente une autre configuration de réalisation.
La figure 4 représente une vue en perspective d'un élément ressort utilisable dans un dispositif élastiquement déformable.
La figure 5 représente une autre variante du système de l'invention.
La figure 6A représente un mode de réalisation selon un exemple dans lequel le support comprend un circuit imprimé.
La figure 6B représente une vue en perspective d'éléments du mode de réalisation de la figure précédente.
La figure 7 représente une autre variable de montage sur un support.
La figure 8A représente une variante de l'option illustrée en figure 7.
La figure 8B donne une illustration de la configuration inactive du dispositif de rétention.
La figure 9 représente une courbe d'évolution du module d'élasticité d'un matériau utilisable pour l'élément fusible en fonction de la température.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les dimensions relatives de l'appareil et du système ne sont pas représentatives de la réalité.

### DESCRIPTION DÉTAILLÉE

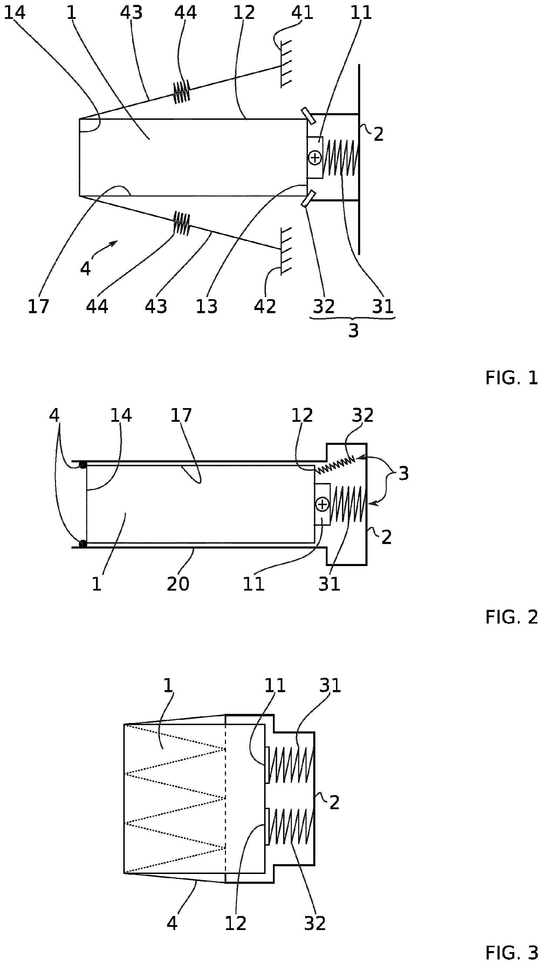

Avant d'entamer une revue détaillée de modes de réalisation de l'invention, sont énoncées ci-après des caractéristiques optionnelles qui peuvent éventuellement être utilisées en association ou alternativement :
- l'au moins une unité 1 est une unité de stockage d'énergie électrique et est dotée d'un premier élément 11 de connexion électrique et d'un deuxième élément 12 de connexion électrique, le système comprenant un dispositif de connexion électrique 3 apte à raccorder électriquement par contact le premier élément 11 et le deuxième élément 12 au support dans la première position ;
- le dispositif de connexion 3 électrique comprend, d'une part, un premier élément complémentaire 31 de connexion électrique apte à raccorder électriquement le premier élément 11 au support 2 dans la première position et, d'autre part, un deuxième élément complémentaire 32 de connexion électrique apte à raccorder électriquement le deuxième élément au support 2 dans la première position ;
- le dispositif élastiquement déformable est formé au moins en partie par au moins une portion d'au moins l'un parmi le premier élément 11, le deuxième élément 12, le premier élément complémentaire 31 et le deuxième élément complémentaire 32 ;
- le déplacement de la première position à la deuxième position entraîne un éloignement suffisant pour déconnecter électriquement l'unité 1 et le support 2 ;
- l'au moins un élément fusible est isolant électriquement.
- l'au moins un élément fusible présente une température de fusion comprise entre 60°C et 120°C.
- l'au moins un élément fusible est à base de polyoléfine ;
- le dispositif élastiquement déformable comprend au moins un ressort à lame ou hélicoïdal ;
- le dispositif de rétention 4 comprend un fil 43 qui, dans la première position, est tendu autour de l'au moins une unité 1, le fil 43 étant au moins en partie en matériau fusible et/ou fixé au support par au moins un élément fusible ;
- le système comprenant un guide 20 de translation de l'au moins une unité 1 depuis la première position vers la deuxième position, au moins un élément fusible étant positionné sur une trajectoire de translation de l'au moins une unité 1 dans le guide 20 ;
- le dispositif de rétention 4 comprend au moins une lame ressort 46 fixée au support 2 et présentant une configuration déformée en flexion de sorte à retenir l'au moins une unité 1 dans la première position, et l'au moins un élément fusible est configuré pour maintenir la lame ressort 46 dans la configuration déformée en dessous de la température de fusion ;
- l'au moins une unité 1 comprend une face avant 13 en regard d'une face du support 2 dans la première position, une face arrière 14 opposée à la première face et une paroi latérale 17 joignant la face avant et la face arrière, la paroi latérale 17 comprenant un retrait 15, la lame ressort 46 comportant une saillie 321 insérée dans le retrait 15 dans la configuration déformée ;
- le dispositif de rétention 4 comprend un élément fusible configuré solidariser l'au moins une unité au support 2 dans la première position ; cette solidarisation peut être prévue pour fixer l'au moins une unité par collage sur le support 2 dans la première position ; la solidarisation n'implique cependant pas forcément une immobilisation complète. Par ailleurs, la solidarisation ne s'effectue pas forcément par un collage avec un élément fusible entre l'unité et le support. Par exemple, le dispositif de rétention peut comprendre au moins un fil servant à suspendre l'unité depuis le support, une extrémité du fil étant raccordée au support et une autre extrémité du fil étant raccordée à l'unité, l'un au moins de ces raccords se faisant par un élément fusible ; éventuellement, c'est le fil lui-même, ou au moins un tronçon du fil, qui est fusible ; une telle disposition en suspension peut permettre une évacuation rapide de l'unité par la force de pousser et la gravité ;
- le système comprend une enveloppe 16 au sein de laquelle l'au moins une unité 1 est placée au moins dans la première position, le dispositif de rétention 4 comprenant au moins une lame ressort 46 fixée au support 2 et présentant une configuration déformée en flexion de sorte à retenir l'enveloppe 16 dans la première position, et l'au moins un élément fusible est configuré pour maintenir la lame ressort 46 dans la configuration déformée en dessous de la température de fusion ;
- l'au moins une unité 1 est désolidarisée du support 2 lors du déplacement relatif de la première position à la deuxième position ;
- le support 2 comprend un circuit imprimé ;
- un appareil comprend un tel système qui est configuré pour permettre à la gravité de déplacer l'unité 1 lorsque le dispositif de rétention 4 ne s'oppose plus à la force de poussée. Eventuellement, le système est configuré pour permettre à la gravité de déplacer l'unité (pour l'éloigner du support) une fois celle-ci désolidarisée du support. Il peut s'agir d'une éjection horizontale par la force de poussée au moins, notamment dans la situation de la Figure 2, puis d'une prise de relai de la force de gravité pour éloigner plus encore l'unité (la cellule du module de stockage) ;
- l'appareil comprend au moins un système tel que décrit précédemment, le dispositif de rétention 4 étant configuré pour s'opposer à la gravité de l'au moins une unité dans une position d'utilisation de l'appareil dans laquelle l'au moins une unité est dans la première position ;
- l'au moins une unité 1 est une unité de stockage d'énergie électrique et est dotée d'un premier élément et d'un deuxième élément de connexion électrique, le système comprenant un dispositif de connexion électrique apte à raccorder électriquement par contact le premier élément et le deuxième élément au support 11 dans la première position ;
- éventuellement, l'élément fusible est configuré de sorte que la température de fusion soit comprise entre une température de surchauffe et une température d'emballement thermique de l'au moins une unité de stockage,
- la température de fusion peut-être comprise entre 60°C et 120°C,
- le déplacement relatif de la première position à la deuxième position présente optionnellement une longueur de course selon une direction, et les connecteurs électriques présentent une longueur selon cette direction, la longueur de course du déplacement relatif étant supérieure à la longueur des connecteurs électriques,
- selon un exemple, le support est configuré pour guider l'unité selon un mouvement principal de translation lors du déplacement relatif de la première position à la deuxième position,
- suivant une option, l'au moins une unité est solidaire du support dans la deuxième position. Lors du déplacement relatif de la première à la deuxième position, l'au moins une unité de stockage peut rester solidaire du support,
- dans un cas non limitatif, le dispositif de connexion comprend un module anti-retour configuré pour empêcher un déplacement relatif de l'au moins une unité par rapport au support, de la deuxième position à la première position,
- suivant une autre option, l'au moins une unité est désolidarisée du support lors du déplacement relatif de la première à la deuxième position,
- éventuellement, la deuxième position est configurée pour produire un découplage thermique total entre l'unité 1 et le support 2 et/ou au moins une autre unité. Le terme « total » s'entend d'au moins 90%. Notamment, l'unité 1 peut choir dans un conteneur d'isolation thermique de l'appareil ou être totalement éjectée de l'apapreil ;
- dans un mode de réalisation, le support comprend un circuit imprimé, et plus particulièrement un système de contrôle de batterie (communément abrégé BMS, de l'anglais Battery Management System).

Dans la suite de la description, le terme « sur » ne signifie pas nécessairement « directement sur ». Ainsi, lorsque l'on indique qu'une pièce ou qu'un organe A est en appui « sur » une pièce ou un organe B, cela ne signifie pas que les pièces ou organes A et B soient nécessairement en contact direct avec l'autre. Ces pièces ou organes A et B peuvent être, soit en contact direct, soit être en appui l'une sur l'autre par l'intermédiaire d'une ou plusieurs autres pièces. Il en est de même pour d'autres expressions telles que par exemple l'expression « A agit sur B » qui peut signifier « A agit directement sur B » ou « A agit sur B par l'intermédiaire d'une ou plusieurs autres pièces». L'expression « A est raccordée électriquement avec B » peut signifier que A est directement raccordée sur B ou bien indirectement par le biais d'un autre élément, par exemple via un fusible ou un interrupteur.

Le terme mobile correspond à un mouvement de rotation ou à un mouvement de translation ou encore à une combinaison de mouvements, par exemple la combinaison d'une rotation et d'une translation.

Le terme « solidaire » utilisé pour qualifier la liaison entre deux pièces signifie que les deux pièces sont liées/fixées l'une par rapport à l'autre, selon au moins un degré de liberté. Par exemple, s'il est indiqué que deux pièces sont solidaires en translation selon une direction Y, cela signifie que les pièces peuvent être mobiles l'une par rapport à l'autre, possiblement selon plusieurs degrés de liberté, à l'exclusion de la liberté en translation selon la direction Y. Autrement dit, si on déplace une pièce selon la direction Y, l'autre pièce effectue le même déplacement.

On entend par température de fusion, un niveau de température à partir duquel un matériau passe de l'état solide à l'état liquide. Ce seuil de température est bien défini pour un matériau donné, les conditions de pression étant peu variables et impactant donc à la marge la température. D'une manière générale, on pourra choisir un matériau dont la température de fusion correspond à une température-seuil de sécurité à partir de laquelle une déconnexion de l'unité est requise.

On entend par un élément « à base » d'un matériau A, un élément comprenant ce matériau A uniquement ou ce matériau A et éventuellement d'autres matériaux. Par exemple, l'élément comprend un matériau A et une enveloppe configurée pour contenir l'élément A, l'enveloppe pouvant être formée d'au moins un matériau distinct du matériau A.

On entend par un paramètre « sensiblement égal/supérieur/inférieur à » une valeur donnée, que ce paramètre est égal/supérieur/inférieur à la valeur donnée, à plus ou moins 10% près, voire à plus ou moins 5% près, de cette valeur.

Dans la description détaillée qui suit, il pourra être fait usage de termes tels que « longitudinal », « transversal », « avant », « arrière », « intérieur », « extérieur ». Ces termes doivent être interprétés de façon relative en relation avec la position relative des composants du dispositif d'alimentation. La direction « longitudinale » peut notamment correspondre à la direction principale du déplacement relatif de l'unité de stockage par rapport au support. La direction « longitudinale » peut en outre correspondre à la direction d'extension principale de l'unité de stockage.

« Interne » désigne les éléments ou les faces tournées vers l'intérieur du dispositif, et « externe » désigne les éléments ou les faces tournées vers l'extérieur du dispositif. Selon un exemple, l'unité de stockage présentant un axe central A, « interne » désigne les éléments ou les faces tournées vers cet axe, et « externe » désigne les éléments ou les faces tournées à l'opposé de cet axe central.

On donne, dans un premier temps, des indications générales sur les fonctionnalités et sur certains composants du système et de l'appareil de l'invention.

Les illustrations fournissent des exemples de réalisation de l'invention en rapport avec des unités de stockage d'énergie électrique. Cependant, il est rappelé que cette application n'est pas limitative. D'autres applications électriques sont possibles, notamment pour la connexion et la déconnexion d'organes telles que des moteurs ou des générateurs ; des applications non électriques sont aussi couvertes, par exemple pour éjecter des pièces d'un système mécanique.

Plus particulièrement, dans le cas des stockages électriques, l'appareil comprenant le système de l'invention peut être configuré pour être alimenté électriquement par une batterie lithium-ion dont la ou les unités forment les cellules.

Dans cette application de stockage d'énergie électrique, le système comprend une, voire plusieurs unité(s) de stockage 1. Les unités de stockage 1, dans le cas du stockage d'énergie électrique, forment des briques élémentaires de stockage électrique, aussi appelées accumulateurs ou cellules. Ces unités peuvent être connectées en parallèle et/ou en série pour constituer un ensemble d'alimentation, communément appelé module de batterie. Un ensemble de modules raccordés en série ou en parallèle constitue généralement un pack-batterie, de tension et de capacité plus importantes.

La cinématique de fonctionnement qui suit est décrite à titre non limitatif pour une unité de stockage 1. Le système comprend un support 2 configuré pour recevoir l'unité de stockage 1. Il comprend en outre un dispositif de rétention 4 de l'unité de stockage 1 au support 2 et un dispositif élastiquement déformable qui tend à repousser l'unité 1 relativement au support. Cet ensemble est configuré pour déconnecter physiquement, et avantageusement électriquement et/ou au moins partiellement thermiquement, l'unité 1 du support 2 lors d'un défaut de fonctionnement. Ce défaut de fonctionnement peut plus particulièrement être une surchauffe, voire un emballement thermique. Le système est donc plus particulièrement configuré pour déconnecter l'unité de stockage 1 en fonction de sa température.

Lorsque la température dans le système, et plus particulièrement la température de l'unité de stockage 1, n'a pas dépassée au cours du temps la température-seuil, et qu'elle reste donc inférieure à cette température seuil, l'unité de stockage 1 et le support 2 sont dans une première position relativement l'un à l'autre. Dans cette première position, illustrée par exemple à la figure 1 dans un premier mode de réalisation, l'unité de stockage 1 est solidaire et raccordée électriquement au support 2. L'unité de stockage 1 peut notamment être solidaire du support 2 selon tous ses degrés de liberté.

Lors du défaut de fonctionnement, l'unité de stockage 1 peut surchauffer. Classiquement, lorsque qu'une unité de stockage 1 est solidaire et raccordée électriquement à son support 2, ce défaut peut se propager dans le système, voire au reste de l'appareil. Les principaux vecteurs de propagation du défaut, par exemple entre différentes unités de stockage 1, sont :
- la conduction thermique par les conducteurs électriques du système,
- la conduction thermique par les pièces structurelles du système, par exemple son support 2,
- une propagation électrique, par exemple un défaut de court-circuit interne d'une unité de stockage peut se transformer en défaut de court-circuit externe pour les unités du même étage,
- la convection naturelle,
- la convection forcée des gaz éjectés par une unité de stockage en défaut,
- les projections de composés chimiques; le rayonnement et les départs de feu issus de l'unité de stockage en défaut.

Lors du défaut de fonctionnement, la température de l'unité de stockage 1 peut s'élever au-dessus d'une température-seuil à partir de laquelle on souhaite déclencher une déconnexion de l'unité. Pour ce déclenchement, le système comprend au moins un élément fusible associé selon les modes de réalisation aux éléments portant les références 4, 43, 45, présentant une température de fusion prédéfinie, et qui peut être relié thermiquement à l'unité de stockage 1, par contact direct ou via l'environnement entre l'élément fusible et l'unité de stockage. Par conduction et/ou convection thermique, la température de l'élément fusible peut à son tour s'élever au-dessus de sa température de fusion qui correspond ici à la température-seuil déclenchant le mouvement de l'unité depuis la première position vers une deuxième position.

Dans la deuxième position, l'unité de stockage 1 peut être dans un état de moindre connexion thermique avec le support 2. Ainsi, la propagation de l'échauffement de l'unité de stockage 1 au support 2 est réduite par rapport à la première position. La conduction thermique de cet échauffement par le support 2 au reste du système, par exemple à d'autres unités de stockage 1 ou à l'appareil, est ainsi réduite. Dans l'état de moindre connexion thermique, la surface de contact entre l'unité de stockage 1 et le support 2 peut être réduite, voire nulle. Cette surface de contact peut être un contact direct entre l'unité de stockage 1 et le support 2, ou par l'intermédiaire d'autres pièces.

En alternative ou en complément, l'unité de stockage 1 n'est pas raccordée électriquement au support 2 dans la deuxième position. Ainsi, le fonctionnement de l'unité de stockage 1 peut être interrompu en cas de surchauffe. Le risque de propagation du défaut de fonctionnement par court-circuit, ou par éjection de gaz issue de l'unité de stockage en défaut, est ainsi évité. Ces gaz étant généralement chauds, chargés de matières conductrices en fusion ou en feu et de nature corrosive, leur propagation dans le système est minimisée.

De par la déconnexion thermique au moins partielle et/ou la déconnexion électrique, le système est sécurisé. De préférence, dans la deuxième position, l'unité de stockage 1 est déconnectée électriquement du support 2 et est dans un état de moindre connexion thermique avec le support 2. Ainsi, le risque qu'une surchauffe de l'unité de stockage en défaut se propage à d'autres unités de stockage 1 ou à d'autres éléments du système est limité. De façon synergique entre ces deux caractéristiques, les principaux vecteurs de propagation du défaut de fonctionnement sont alors coupés. La sécurisation du système d'alimentation est encore augmentée.

La force de poussée exercée par le dispositif élastiquement déformable peut être une force d'appui ou de traction. Le terme « poussée » s'entend donc de la capacité du dispositif élastiquement déformable à repousser l'unité vis-à-vis du support 2.

De préférence, la température de fusion est supérieure ou égale à une température normale maximale de fonctionnement de l'unité 1. Cette température est le seuil à partir duquel on est en surchauffe. La température-seuil peut être supérieure ou égale à la température de surchauffe, voire à la température d'emballement thermique de l'unité de stockage 1. Plus préférentiellement encore, la température de fusion est comprise entre la température de surchauffe et la température d'emballement thermique de l'unité de stockage. Ainsi, la déconnexion de l'unité de stockage est effectuée avant son emballement thermique. Avantageusement, la température de fusion est inférieure à 120°C, préférentiellement inférieure à 100°C. La température de fusion peut par exemple être sensiblement comprise entre 60°C et 120°C, cette gamme de températures étant particulièrement adaptée à l'exemple selon lequel les unités de stockages sont des batteries lithium-ion. La température de fusion peut par exemple être sensiblement égale à 80°C.

Dans une application électrique, et en particulier pour une unité de stockage d'énergie électrique, le support 2 peut comprendre des connecteurs électriques 21, 22 complémentaires des éléments de connexion 11, 12 de l'unité. Les connecteurs du support 2 peuvent être reliés en série et/ou en parallèle par un bus de puissance (désigné en anglais par « *busbar»)* du support 2. Un bus de puissance consiste généralement en un jeu de barres ou en des pistes conductrices sur un circuit imprimé, par exemple en cuivre. Notons que les connecteurs 21, 22 du support 2 peuvent être reliés en série et/ou en parallèle par tout type de réseau de puissance.

Notons que la nature et les dimensions des connecteurs et des conducteurs électriques du système peuvent être adaptés pour correspondre aux courants nominaux et maximums pouvant être délivrés par la ou les unité(s) de stockage 1.

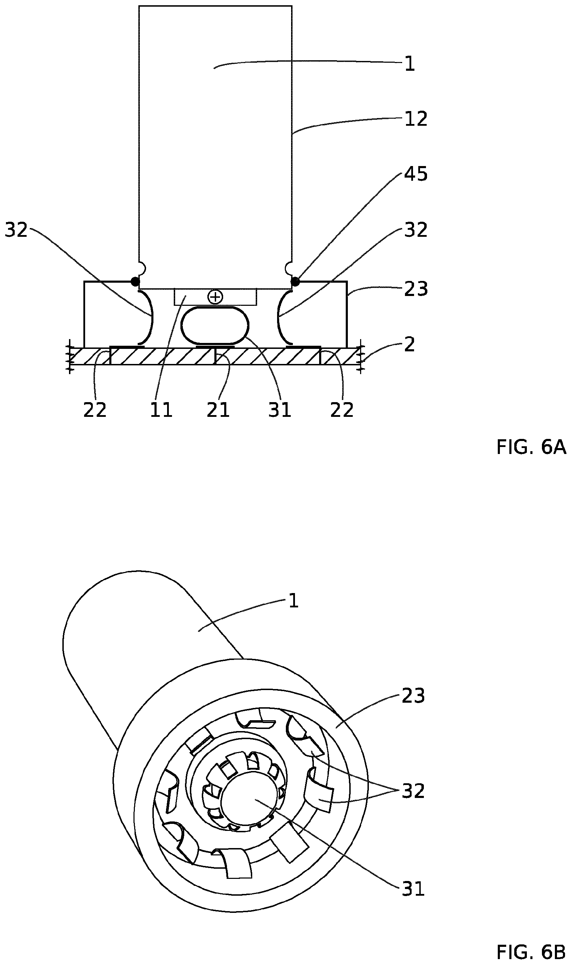

Selon un exemple, le support 2 comprend un bus de puissance, par exemple un jeu de barres. On verra que, selon l'exemple illustré en figure 6A, le support 2 comprend un bus de puissance sous la forme d'un circuit imprimé, par exemple un système de gestion de batterie (communément abrégé BMS, de l'anglais par « *Battery Management System* »). Le dispositif d'alimentation permet ainsi d'augmenter les fonctionnalités d'un BMS, et notamment de permettre une sécurisation passive d'un BMS.

Lors du déplacement de la première à la deuxième position, l'unité de stockage 1 peut être désolidarisée du support 2. L'unité de stockage 1 n'est alors plus reliée mécaniquement au support 2. Une fois désolidarisée, l'unité de stockage 1 peut être isolée du dispositif 1. Par exemple, l'unité de stockage 1 peut tomber dans un bain :
- d'un fluide diélectrique, tel que de l'huile ou un gaz,
- d'un fluide conducteur électrique, tel que de l'eau salée),
- de granulés, tel que de la vermiculite de granulés CellBlock^{®}.

L'impact de l'unité de stockage 1 en défaut sur le reste du dispositif 1, voire de l'appareil, peut ainsi être minimisé. Cet exemple de réalisation est particulièrement adapté aux dispositifs d'alimentation électrique stationnaires ou embarqués, de grande taille. L'appareil ou le système peut en effet être suffisamment grand pour comprendre un compartiment de réception de l'unité de stockage 1 défectueuse.

Dans la deuxième position, l'unité de stockage 1 peut en outre être éjectée du système ou de l'appareil qu'elle équipe. Cet exemple de réalisation est particulièrement adapté à un drone survolant la mer. Dans le cas où une unité de stockage 1 venait à surchauffer, l'éjection de l'unité à la mer aurait moins de conséquences que la perte de l'appareil complet. Les appareils pour applications spatiales pourraient également bénéficier d'une éjection d'une unité de stockage 1 en défaut.

Les modes de réalisation illustrés aux figures 1 à 8 sont maintenant décrits plus en détail.

Dans le premier exemple fourni à la figure 1, l'unité 1 se présente sous la forme d'un élément allongé, par exemple cylindrique, et présentant une face avant 13, une face arrière 14 opposée à la face avant 13, et, entre ces deux faces, une paroi 17. Dans la situation représentée, la face avant 13 est située en regard d'une face d'un support 2 présentant, pour l'exemple, une plaque de base. D'un point de vue mécanique, un dispositif de rétention 4 maintient l'unité 1 relativement au support 2. Ce dispositif se présente ici sous la forme d'un fil 43 disposant à chacune de ses extrémités d'un ancrage 41, 42 assurant sa fixation relativement au support 2. Le terme « fil » s'entend de toute structure allongée apte à être tendue autour de l'unité, et inclut les notions de câble ou de sangle.

Les ancrages peuvent être disposés au niveau de la plaque de base du support 2 ; l'illustration fournie est purement schématique. Le fil 43 s'applique sur l'unité, et préférentiellement pour le moins au niveau de la face arrière 14. Éventuellement, le dispositif de rétention 4 peut être équipé d'une ou plusieurs portions élastiques 44, par exemple sous forme de ressort hélicoïdal ou d'élastomère, pour assurer un amortissement de mouvement mineur de l'unité relativement au support 2 et assurer la rétention malgré les dilatations thermiques de l'unité 1 relativement au support 2.

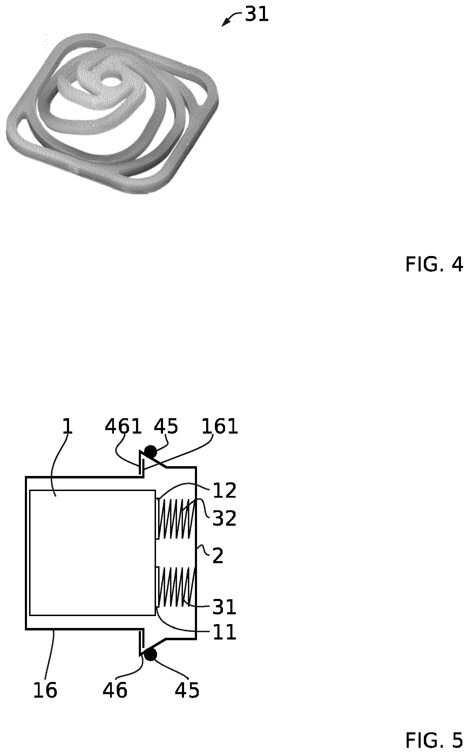

Le dispositif de rétention 4 est configuré pour tendre à plaquer l'unité vers le support 2. Dans la première position représentée à la figure 1, la force produite par le dispositif de rétention 4 s'oppose à une force de poussée développée par un dispositif élastiquement déformable. Ce dernier est en effet configuré pour produire une force tendant à repousser l'unité relativement au support, et, dans le cas d'espèce, pour tendre à éloigner la face avant 13 de l'unité de la plaque de base du support 2 qui lui fait face. Dans ce premier mode de réalisation, le dispositif élastiquement déformable comprend un élément 31. Ce dernier peut typiquement se présenter sous la forme d'un ressort, par exemple de type hélicoïdal ou du type ressort à spires dont un exemple est représenté à la figure 4.

Dans ce cas de figure, l'unité 1 est dans une situation d'équilibre, dans la première position, la force de poussée de l'élément 31 et la force de rétention du dispositif 4 produisant cet équilibre ; elles sont de préférence de même direction (mais de sens opposés) qui peut être dirigée selon un axe longitudinal de l'unité ; éventuellement, ces forces sont situées sur cet axe.

Dans une application électrique, l'unité 1 est par ailleurs raccordée électriquement au support 2. À cet effet, l'unité comporte un premier élément de connexion 11 qui peut être l'un des pôles d'un accumulateur d'électricité, par exemple le pôle positif, et un deuxième élément de connexion 12 formant l'autre pôle. Dans l'exemple, le premier élément de connexion 11 est un pôle positif central d'une unité de stockage et le deuxième élément de connexion 12 est un pôle négatif, sous forme de contact périphérique de l'unité (au niveau de la paroi 17, le boîtier de l'accumulateur formant l'un des pôles). Du fait de la force produite par le dispositif de rétention 4, le contact entre les éléments de connexion 11, 12 et le support 2 se fait par pression. Les éléments de connexion 11, 12 sont en effet plaqués contre le support 2 sous l'action du dispositif de rétention 4.

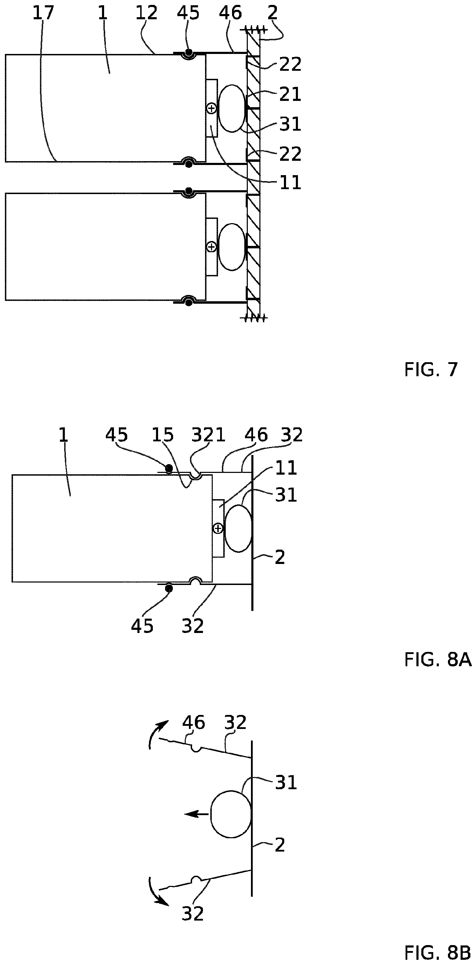

Avantageusement, le support 2 comporte un premier connecteur 21 et un deuxième connecteur 22 susceptibles de coopérer en continuité électrique avec le premier élément de connexion 11 et le deuxième élément de connexion 12. Ces connecteurs sont illustrés et détaillés plus loin en référence à la figure 6A et à la figure 7. En outre, dans le cas de la figure 1, un dispositif de connexion 3 relie le premier et le deuxième éléments 11, 12 et le premier et le deuxième connecteurs 21, 22. Dans ce cas de figure, le dispositif de connexion 3 comprend un élément complémentaire 32 raccordant le deuxième élément 12 et le support, au niveau du deuxième connecteur. Un autre élément complémentaire, portant la référence 31, assure la liaison électrique entre le premier élément 11 et le premier connecteur 21. Éventuellement, les éléments 31, 32 peuvent être solidaires des connecteurs 21, 22 voire formés d'un seul tenant avec ces derniers. De manière caractéristique dans ce mode de réalisation, c'est au moins l'un des éléments complémentaires 31, 32 qui réalise au moins en partie le dispositif élastiquement déformable. La vue de la figure 1 reflète que c'est le premier élément complémentaire 31 qui est réalisé sous forme d'un élément ressort apte à se déformer et à rester sous contrainte dans la première position de l'unité visible à cette figure. Le deuxième élément complémentaire 32 est ici sous la forme de pattes métalliques.

En résumé, dans la première position présentée à la figure 1, l'unité 1 est en situation statique vis-à-vis du support 2 dont elle est solidaire. L'unité 1 est par ailleurs raccordée électriquement dans cette position. Cette situation peut cependant être contrariée en cas d'élévation excessive de la température, pour déplacer l'unité 1 vers une deuxième position plus éloignée du support 2. À cet effet, le dispositif de rétention 4 comprend un élément fusible qui présente une température de fusion assurant l'effondrement (de préférence irréversible) de la résistance mécanique du dispositif de rétention lorsque la température de fusion est franchie ; le vocable « franchir » s'entend d'une température de l'élément fusible à partir et au-delà de cette température de fusion depuis une température inférieure.

Suivant une première possibilité, c'est l'ensemble du fil 43 qui forme l'élément fusible. En alternative, c'est une autre partie, plus isolée, ou plusieurs parties qui forment l'élément fusible. Par exemple, l'élément fusible peut être disposé au niveau de la et/ou l'autre des ancrages 41 ,42 ou encore à tout endroit sur la longueur du fil 43.

Comme mentionné précédemment, le fil 43 est une structure allongée. Que l'ensemble du fil 43 ou que seules une ou plusieurs parties du fil 43 forment l'élément fusible, ce dernier est de fait allongé. De fait, le dépassement de la température de fusion à un point quelconque de l'élément fusible dû à un échauffement local permet la rupture du fil 43 et emporte la libération de l'unité 1. Le caractère allongé du fil permet donc un gain en inertie thermique et une meilleure efficacité en ce qui concerne la séparation de l'unité 1 et du support 2.

Il est à noter que la représentation de la figure 1 présente un dispositif de rétention avec un seul fil 43. Il est entendu qu'une pluralité de tels fils peut-être répartie autour de l'unité pour compléter la rétention. Par exemple, au moins un fil 43 complémentaire peut être disposé de manière similaire au premier, mais décalée angulairement de 90°.

La figure 2 fournit un autre mode de réalisation. Comme dans le cas précédent, le premier élément complémentaire 31 du dispositif de connexion assure à la fois la fonction de dispositif déformable élastiquement et une fonction de raccordement électrique, étant rappelé que cette combinaison de fonctions n'est pas forcément nécessaire dans l'invention. Cette fois, un guide 20 entoure au moins partiellement la paroi 17 de l'unité 1 de sorte à la guider, ici suivant une direction de translation dirigée selon son axe longitudinal. Par exemple, le guide 20 peut être formé avec une enveloppe de section similaire à celle de l'unité 1, avec une dimension un peu supérieure. Par exemple, le guide 20 peut être une enveloppe de forme cylindrique entourant une unité 20 elle-même cylindrique. D'une manière générale, toute forme de guide 20 susceptible d'assurer un guidage de l'unité dans sa direction de déplacement depuis la première position vers la deuxième position entre dans le cadre de l'invention.

Dans le cas présent, le guide 20 est raccordé au support 2 de sorte à former un seul ensemble mécanique. De préférence, le guide 20 n'autorise qu'une liberté de mouvement pour l'unité 1, à savoir le mouvement de translation passant de la première à la deuxième position.

En situation normale, lorsque la température de fusion n'est pas atteinte, l'unité 20 est maintenue dans le guide 20, à l'encontre de la poussée de l'élément élastiquement déformable 31, par un dispositif de rétention 4 ici sous forme d'un ou plusieurs éléments de butée interférant avec la trajectoire de déplacement de l'unité 1 depuis la première position. Tel que visible sur la figure 2, le ou les éléments de butée 4 font saillie vers l'intérieur du guide 20 et bloquent l'unité 1, en butant sur sa face arrière 14. Les éléments fusibles sont les éléments de butée 4, par exemple des plots organisés à plusieurs endroits sur la paroi intérieure du guide 20, ou encore un bourrelet continu. On comprend que la fusion des éléments 4 libère la capacité de translation de l'unité.

Notons que l'unité 1 en défaut peut être éjectée du guide 20 après le guidage en translation.

Si l'éjection de l'unité de stockage 10 n'est pas possible ou pas souhaitable, l'unité de stockage 1 peut rester solidaire du support 2 lors du déplacement de la première à la deuxième position.

Toujours dans l'exemple de la figure 2, le deuxième élément complémentaire 32 est sous la forme d'un contact ressort de manière à accommoder d'éventuels petits mouvements de l'unité, par exemple dus à des vibrations ou des dilatations thermiques.

La figure 3 présente un autre exemple dans lequel, pour minimiser le nombre de pièces, la mobilité est mise en oeuvre à l'échelle d'un module constitué d'une pluralité d'accumulateurs ; ces derniers peuvent alors être montés en parallèle ou en série ou en matrice d'un point de vue électrique. Ils sont mécaniquement solidaires au sein du module formant ainsi une unité complexe. L'illustration ne fournit pas le détail de l'arrangement entre les accumulateurs, mais elle forme un module présentant, comme précédemment, un premier et un deuxième éléments de connexion 11, 12. Ces derniers sont de préférence situés en face avant du module formant l'unité. Dans l'exemple, le premier élément complémentaire 31 et le deuxième élément complémentaire 32 sont tous les deux organisés sous forme d'éléments élastiquement déformables de sorte à servir à la fois de moyens de connexion électrique et de dispositifs élastiquement déformables tendant à pousser l'unité.

Dans cet exemple, le support 2 comporte une couronne périphérique de guidage d'une portion de la longueur de l'unité. C'est dans ce logement que les éléments de connexion 11, 12 sont raccordés au support. De manière assez similaire au mode de réalisation de la figure 1, un dispositif de rétention 4 sous forme d'un ou plusieurs fils parcourt une portion de l'unité de sorte à assurer une rétention à l'opposé de la force de poussée des éléments 31, 32. Par exemple, un fil de rétention formant au moins en partie l'élément fusible peut parcourir en zigzag une partie du pourtour et la face arrière de l'unité 1 en étant raccordé de part en part à la couronne d'insertion de l'unité 20 dans le support. Avec ce mode de réalisation, le dépassement de la température de fusion à un point quelconque du fil dû à un échauffement local permet de déplacer l'unité 1 vers une deuxième position plus éloignée du support 2.

Le mode de réalisation de la figure 5 présente une autre variante dans laquelle l'unité 1 comprend en outre une enveloppe 16 recouvrant une partie du reste de l'unité par sa face arrière et associée à une portion ressort solidaire du support 2. Par exemple, la portion ressort comprend une ou plusieurs lames ressorts 46 aptes à recouvrir une extrémité distale de l'enveloppe 16 dans la première position de l'unité 1. La portion ressort peut aussi être constituée par une couronne déformable en flexion d'un seul tenant, plutôt que par des lames. La portion ressort est configurée pour être déformée dans la première position, en particulier par l'application d'un effort de flexion sur sa périphérie externe, de sorte à appliquer une extrémité 461 de cette portion sur l'enveloppe 16. La déformation en flexion peut être maintenue sous contrainte par l'intermédiaire d'un élément fusible 45 sous forme d'anneau ceinturant la portion ressort ; et, lorsque la portion ressort est formée d'une pluralité de lames 46, l'élément fusible 45 aura tendance à les rapprocher.

Dans le cas illustré, pour assurer une rétention par butée, l'extrémité distale 461 de lames 46 comprend une partie en crochet rabattue vers l'enveloppe 16 de l'unité. De son côté, l'enveloppe 16 comprend une bordure 161 à son extrémité distale dirigée vers l'extérieur et susceptible de buter sur la partie en crochet des lames 46. Cette rétention par obstacle ressort de la figure 5. Lorsque l'élément fusible 45 n'est plus à l'état solide, la flexion des lames 46 est relâchée et la bordure 161 peut s'échapper de la partie en crochet de l'extrémité 461. N'étant plus retenue, l'unité est mobilisée par les éléments ressorts 31, 32, pour s'éloigner de la première position.

Les figures 6A et 6B présentent une autre variante. Comme dans les autres modes de réalisation, bien que non limitatifs, on utilise des éléments de contact électrique, en particulier les éléments complémentaires 31, 32, pour former des éléments élastiquement déformables, en produisant ainsi des contacts ressorts. À ces figures, ces contacts sont nombreux, par exemple pour augmenter les courants admissibles. On peut ainsi adapter le nombre de contacts au courant à faire transiter en limitant la chute de tension et donc les pertes. Cette caractéristique permet également d'augmenter la force de poussée appliquée sur l'unité 1.

La représentation en coupe donnée à la figure 6A montre un support 2 comme précédemment, avec un premier connecteur 21 apte à être mis en continuité électrique avec le premier élément de connexion 11, un deuxième connecteur 22 apte à être mis en continuité électrique avec le deuxième élément de connexion 12, les éléments 11, 12 étant ici les pôles d'un accumulateur. Le support comprend en outre un receveur 23 comprenant une portion annulaire s'étendant en saillie au-dessus de la face du support 2 et apte à recevoir, en insertion partielle, l'unité 1 par sa face avant 13. Dans le cas d'espèce, l'unité est retenue relativement au support 2 par l'intermédiaire d'un élément fusible 45, par exemple sous forme d'un joint de colle entre la bordure supérieure du receveur 23 et la paroi 17 de l'unité 1.

La force de poussée est ici assurée par le caractère élastiquement déformable d'un premier élément complémentaire 31 et d'un deuxième élément complémentaire 32 du dispositif de connexion assurant la continuité électrique entre les éléments 11, 12, 21, 22. Plus précisément, le premier élément complémentaire 31 est ici central et sous forme d'un contact pressé, déformé en flexion dans la première position de l'unité. Le deuxième élément complémentaire 32 comprend une pluralité de lames déformées élastiquement en pression (cependant, il n'est pas exclu qu'une seule lame suffise, ou pour le moins deux lames diamétralement opposées), éventuellement repliées comme dans le cas de la figure 6A, et raccordées d'une part au pôle négatif de l'accumulateur, et d'autre part au connecteur 22 du support 2.

Un exemple de réalisation en perspective est donné à la figure 6B, avec huit pattes sous forme de lames ressorts pour les éléments 32. La pluralité de pattes ayant une fonction ressort permet d'assurer une pluralité de contacts électriques en parallèle avec une pression de contact maintenue. On assure ainsi une très faible résistance parasite permettant de faire transiter les niveaux de courant des stockages, en particulier ceux à base d'accumulateurs Lithium-ion. Cet exemple donne une poussée équilibrée à la fois centrale et périphérique sur la face avant de l'unité. Et la partie fusible forme un joint, avantageusement continu, entre la paroi de l'unité et le receveur. Ce dernier de préférence formé de manière intégrale avec le reste du support 2.

Suivant une variante, la partie sous forme de couronne annulaire du receveur 23 peut être intégrée dans l'unité 20 et l'élément fusible 45 peut être une partie de collage entre la tranche de cette couronne annulaire et la face du support 2.

Un autre mode de réalisation correspond à la figure 7 avec la présence, en parallèle, d'une pluralité d'unités 1. De préférence, le support 2 correspond, pour le moins dans cet exemple, mais éventuellement pour d'autres modes de réalisation, à une carte à circuits imprimés, comprenant des pistes susceptibles de former les connecteurs 21, 22 pour le moins.

Comme dans le mode de réalisation de la figure 5, on exploite une capacité de déploiement en corolle des dispositifs de rétention pour passer de la première position à une position de libération de chaque unité 1. Des lames ressorts 46 s'étendent depuis la face du support 2 pour s'appliquer sur la paroi 17 de l'unité 1 considérée. Non sollicitée, chacune des lames 46 est déployée latéralement et ne s'applique pas sur l'unité 1. Cependant, au moyen d'éléments fusibles 45, les lames 46 sont maintenues en position contrainte en flexion contre l'unité 1. Les éléments fusibles peuvent être des points de colle, ou encore un anneau ceinturant les lames 46 et la paroi 17 de l'unité 1. Le nombre de lames 46 n'est pas limité, mais, de préférence, au moins deux lames sont présentes, avantageusement à des positions diamétralement opposées autour de l'unité 1. Plus de lames 46 peuvent être employées, et elles sont, dans ce cas, préférentiellement régulièrement réparties autour de l'unité. Éventuellement, les lames 46 peuvent être remplacées par une seule lame 46 sous forme d'une couronne déformable en flexion ; ou les lames 46 peuvent être solidaires d'une base commune en forme de couronne. De manière préférée, une pluralité de lames permet d'assurer une pluralité de contacts électriques en parallèle avec une pression de contact maintenue sur chacun de ces contacts. On assure ainsi une très faible résistance parasite permettant de faire transiter les niveaux de courant des accumulateurs Lithium-ion.

Suivant une possibilité non illustrée, la rétention dans la première position s'opère par frottement uniquement, en pinçant l'unité grâce aux lames 46. Cependant, dans l'illustration de la figure 7, la paroi 17 de l'unité 1 présente un retrait 15 pouvant se présenter sous la forme d'une gorge. Et chaque lame 46 présente une saillie dirigée vers l'unité et configurée pour s'insérer dans le retrait 15 dans la première position de l'unité. Ainsi, on réalise une rétention par obstacle. Si la température de fusion est atteinte, les lames 46 sont libérées de l'unité 1 et se déploient latéralement ; l'unité n'est alors plus retenue et la poussée exercée par le dispositif élastiquement déformable engendre un déplacement. Dans cet exemple, le dispositif élastiquement déformable assurant la poussée comprend le premier élément complémentaire 31 qui est un contact électrique par pression. De telles gorges 15 existent sur les petits accumulateurs cylindriques, par exemple de formats connus sous les numéros 18650 ou 21700 de la Commission électrotechnique internationale, c'est-à-dire de 18 mm (respectivement 21 mm) de diamètre et de 65 mm (respectivement 70 mm) de long. Pour ces accumulateurs, la borne positive 11 est munie d'un joint périphérique isolant assurant l'isolation électrique de la borne 11 par rapport au boîtier 17 et l'étanchéité de l'accumulateur, et la borne munie de son joint est sertie dans le boîtier 17. La gorge 15 est une résultante de cette opération de sertissage, pour réaliser un appui pour le joint.

La variante présentée à la figure 8A et à la figure 8B diffère peu du cas précédent. Une coopération par obstacle y est toujours formée entre des lames 46 et une partie de la surface extérieure de l'unité 20, de préférence au niveau de la paroi 17. Ici, l'élément fusible 45 est placé un autre endroit, de préférence à proximité de l'extrémité distale des lames 46 pour limiter le mouvement de force nécessaire à la fixation par la pièce fusible, située ici loin du point de mise en flexion de la lame 46. Un tel positionnement assure une pression constante maîtrisée sur tous les points de contact électrique pour minimiser la résistance parasite équivalente globale. De préférence, l'élasticité des lames permet d'insérer l'unité 1 à la fin d'un process de montage.

En effet, on peut réaliser l'élément fusible 45 sous forme d'un anneau qui maintient par défaut les lames 46 en position déformée de sorte à délimiter un volume d'insertion de l'unité. Cet élément fusible annulaire 45 peut être reçu dans un creux, de préférence formé par sertissage, sur la ou les lames 46 permettant de retenir l'anneau d'un côté et formant une zone de contact efficace sur la paroi 17 de l'unité de l'autre côté.

Le support est par exemple constitué d'une carte à circuits imprimés et les lames peuvent être simplement soudées (par exemple avec un alliage d'étain) ou fixées de manière traversante sur cette dernière. Lors de l'insertion, chaque lame se déforme légèrement jusqu'à ce que l'unité parvienne dans la première position. De préférence, dans cette situation, la coopération d'un retrait 15 de l'unité avec une saillie 321 de la lame bloque tout recul.

Pour des applications à des unités de stockage, pour le moins le dernier mode de réalisation illustré à la figure 8A présente l'avantage que toutes les unités sont dans le même sens et non pas montées tête-bêche comme c'est souvent le cas dans des packs de batteries réalisés à partir de petits accumulateurs cylindriques. De plus, tous les évents d'évacuation des gaz internes en cas de surpression sont situés du même côté, ce qui simplifie la conception du circuit d'évacuation de ces gaz à l'extérieur du pack batterie,

La pièce 46 a potentiellement un excellent contact thermique avec l'accumulateur, ce qui améliore la précision de la température de déclenchement de la sécurité thermique. De manière préférée, un connecteur à pattes de contact multiples est utilisé pour le pôle positif central. Dans ce cas, les accumulateurs peuvent être mis en place par insertion avant ou après mise en place de la pièce 46 et selon l'élasticité de celle-ci. La présence d'une gorge au niveau de la paroi 17 d'un accumulateur correspond à un standard pour certains accumulateurs cylindriques ; cette gorge est issue du procédé de fabrication et on n'en tire ici profit pour un autre besoin, celui d'une rétention par obstacle.

En cas de dépassement de la température maximale de l'accumulateur, celui-ci est repoussé par la pièce 31 qui assure à la fois les fonctions de contact électrique avec le pôle positif et de ressort d'éjection.

Ainsi, la figure 8B donne un exemple du déploiement des lames libérant l'unité. L'élément fusible a préalablement libéré les lames par sa fusion. Ce mécanisme est similaire à celui des figures 5 et 7.

Selon l'application, les accumulateurs peuvent aussi être placés verticalement pour utiliser la gravité comme moyen d'éloignement de l'accumulateur en défaut complémentaire. La sécurité vis-à-vis de la propagation d'un défaut d'un accumulateur aux autres accumulateurs peut ainsi être fortement améliorée.

Pour limiter le nombre de pièces, et de préférence rendre concomitantes une déconnexion électrique et une déconnexion mécanique, les exemples donnés précédemment associent la fonction de dispositif élastiquement déformable et de raccordement électrique de l'unité. Cependant, il est rappelé que cette combinaison n'est pas nécessaire à la réalisation de l'invention. En particulier, les éléments précédemment décrits (notamment les éléments ressort du dispositif de connexion 3) peuvent être décorrélés d'une fonction électrique et simplement servir à exercer la poussée. Dans ce cas, si l'unité a une fonction électrique, le dispositif de connexion 3 sera séparé du dispositif élastiquement déformable, qui pourra par exemple comprendre des ressorts dédiés à cette fonction.

En ce qui concerne le matériau du ou des éléments fusibles, il est possible d'opter pour un matériau isolant. En effet, dans une application électrique, la connexion électrique dans la première position se fait au niveau des éléments de connexion 11, 12 et non au niveau du ou des éléments fusibles. Utiliser un matériau isolant présente l'avantage dans ce contexte d'éviter tout problème lié aux différences de potentiel électrique entre les éléments au contact du système de rétention. Cela permet également d'éviter que, comme dans le document DE 1 2101 038 066 A1, les éléments fusibles constituent des connecteurs électriques et que ces derniers soient parcourus par un courant faisant augmenter la température locale jusqu'à dépasser la température de fusion des éléments fusibles, et ce avant que la température seuil au niveau de l'unité 1 à partir de laquelle sa déconnexion est requise ne soit atteinte.

Les matériaux isolants ont l'avantage de présenter une température de fusion basse en comparaison avec les matériaux habituellement utilisés dans les systèmes à fusible. Avantageusement, on opte pour une température de fusion du matériau du ou des éléments fusibles comprise entre 60 et 120°C. Ces températures présentent l'avantage d'être compatibles avec les températures supportables par les différentes éléments du système et notamment l'unité 1.

Préférentiellement, on opte pour un matériau appartenant au groupe des polymères. Ce groupe se caractérise par sa richesse et permet une grande souplesse dans le choix de la température de fusion du matériau pour la confection de l'élément fusible. Ce groupe se caractérise également par sa richesse en matière de propriétés de déformation et de résistance, et confère ainsi une grande liberté en ce qui concerne la forme de l'élément fusible.

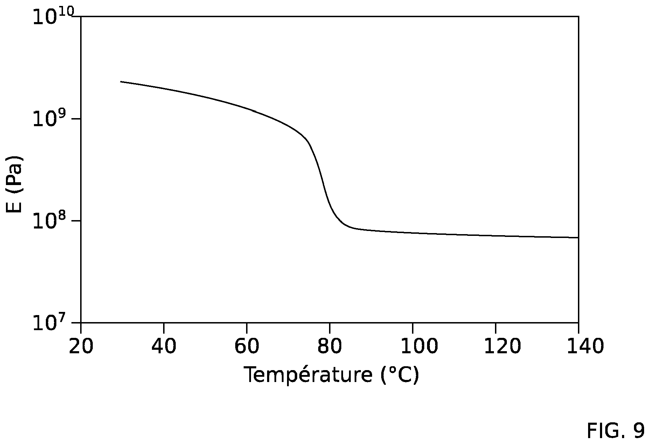

Parmi les polymères, on peut notamment utiliser du polyéthylène. La température de transition solide liquide peut être ajustée par la densité et le processus de mise en oeuvre de ce matériau, par exemple entre 70 et 80°C. Le polyéthylène a des molécules longues et la transition de phase n'est pas très marquée en température. Pour avoir une transition plus franche, on peut avoir recours à des molécules plus petites, par exemple pour former une colle fusible. Dans ce contexte, la figure 9 fournit un exemple de comportement mécanique des polyoléfines, qui sont des polymères d'alcènes, en fonction de la température. Autour de 80°C, le module d'Young de ce matériau s'effondre, reflétant la transition de phase.

Dans une application à des accumulateurs lithium-ion, la température maximale en fonctionnement normal est typiquement de l'ordre de 60°C alors que la température de première réaction amenant à l'emballement de l'accumulateur est de l'ordre de 100°C, si bien que la température de fusion du matériau formant l'élément fusible est dans ce cas bien positionnée entre ces deux valeurs.

Au vu de la description qui précède, il apparaît clairement que l'invention propose un système améliorant la déconnection d'une unité lors d'un défaut de fonctionnement, par rapport aux solutions existantes. Une méthode d'utilisation d'un tel système est aussi avantageuse dans un contexte de maintenance ou de recyclage. En effet, dans ce cas, il suffit de couper les liaisons fusibles, par une élévation de température, pour démonter toutes les unités de manière simple. La fusion peut s'opérer soit localement en apportant une source de chaleur à la température requise, soit en montant en température tout le système ou tout l'appareil.

Les différentes figures 1 à 8B ont fourni des modes de réalisation détaillant des exemples de dispositifs de rétention et de dispositifs élastiquement déformables. Il est possible de combiner l'un des dispositifs de rétention et/ou l'un des dispositifs élastiquement déformable avec tout autre exemple de dispositif de rétention et/ou de dispositif élastiquement déformable des autres modes de réalisation. Par exemple, cela peut permettre de disposer de plusieurs modalités de rétention de l'unité, par des butées à différents endroits et avec différents modes de relâchement pour mobiliser l'unité et/ou plusieurs modalités de formation de ressorts.

Bien que les exemples décrits illustrent notamment un déplacement absolu de l'unité de stockage 1 par rapport au support 2, on peut prévoir que le support 2 soit mobile entre une première position et une deuxième position dans le système. Par exemple, le support 2 coulisse en translation entre la première position et la deuxième position.

Les unités de stockage illustrées dans les dessins sont de forme cylindrique. On peut prévoir que le dispositif 1 soit adapté à des unités de stockage de format et de taille variés.

### LISTE DES REFERENCES

- 1.: Unité
- 11.: Premier élément de connexion
- 12.: Deuxième élément de connexion
- 13.: Face avant
- 14.: Face arrière
- 15.: Retrait
- 16.: Enveloppe
- 17.: Paroi
- 161.: Rebord
- 2.: Support
- 20.: Guide
- 21.: Premier connecteur
- 22.: Deuxième connecteur
- 23.: Receveur
- 3.: Dispositif de connexion
- 31.: Premier élément complémentaire
- 32.: Deuxième élément complémentaire
- 321.: Saillie
- 4.: Dispositif de rétention
- 41.: Ancrage
- 42.: Ancrage
- 43.: Fil
- 44.: Portion élastique
- 45.: Elément fusible
- 46.: Lame ressort
- 461.: Extrémité

## Revendications

1. Système comprenant :
• au moins une unité (1),
• un support (2) configuré pour recevoir l'au moins une unité (1) de manière amovible au moins dans une première position dans laquelle l'au moins une unité (1) est solidaire du support (2), un dispositif élastiquement déformable configuré pour être déformé élastiquement dans la première position de sorte à exercer une force de poussée sur l'au moins une unité (1) relativement au support,
- un dispositif de rétention (4) comprenant au moins un élément fusible présentant une température de fusion, le dispositif de rétention (4) étant configuré pour s'opposer à la force de poussée de sorte à maintenir l'au moins une unité (1) dans la première position lorsque la température de l'élément fusible est en dessous de la température de fusion, et pour ne pas s'opposer à la force de poussée lorsque la température de l'élément fusible franchit la température de fusion de sorte que la force de poussée déplace l'au moins une unité (1) vers une deuxième position différente de la première position, le système étant **caractérisé:**
- **en ce que** l'au moins une unité (1) est une unité de stockage d'énergie électrique et est dotée d'un premier élément (11) de connexion électrique et d'un deuxième élément (12) de connexion électrique, le système comprenant un dispositif de connexion électrique (3) apte à raccorder électriquement par contact le premier élément (11) et le deuxième élément (12) au support (2) dans la première position,
- et **en ce que** le contact entre le premier élément (11) et le deuxième élément (12) de connexion électrique et le support (2) est un contact par pression uniquement.

2. Système selon la revendication précédente, dans lequel le dispositif de connexion (3) électrique comprend, d'une part, un premier élément complémentaire (31) de connexion électrique apte à raccorder électriquement le premier élément (11) au support (2) dans la première position et, d'autre part, un deuxième élément complémentaire (32) de connexion électrique apte à raccorder électriquement le deuxième élément au support (2) dans la première position.

3. Système selon la revendication précédente, dans lequel le dispositif élastiquement déformable est formé au moins en partie par au moins une portion d'au moins l'un parmi le premier élément (11), le deuxième élément (12), le premier élément complémentaire (31) et le deuxième élément complémentaire (32).

4. Système selon l'une des revendications 1 à 3, dans lequel le déplacement de la première position à la deuxième position entraîne un éloignement suffisant pour déconnecter électriquement l'unité (1) et le support (2).

5. Système selon l'une quelconque des revendications précédentes, dans lequel l'au moins un élément fusible est isolant électriquement.

6. Système selon l'une quelconque des revendications précédentes, dans lequel l'au moins un élément fusible présente une température de fusion comprise entre 60°C et 120°C.

7. Système selon l'une quelconque des revendications précédentes, dans lequel l'au moins un élément fusible est à base de polyoléfine.

8. Système selon l'une quelconque des revendications précédentes, dans lequel le dispositif élastiquement déformable comprend au moins un ressort à lame ou hélicoïdal.

9. Système selon l'une quelconque des revendications précédentes, dans lequel le dispositif de rétention (4) comprend un fil (43) qui, dans la première position, est tendu autour de l'au moins une unité (1), le fil (43) étant au moins en partie en matériau fusible et/ou fixé au support par au moins un élément fusible.

10. Système selon l'une quelconque des revendications précédentes, comprenant un guide (20) de translation de l'au moins une unité (1) depuis la première position vers la deuxième position, au moins un élément fusible étant positionné sur une trajectoire de translation de l'au moins une unité (1) dans le guide (20).

11. Système selon l'une quelconque des revendications précédentes, dans lequel le dispositif de rétention (4) comprend au moins une lame ressort (46) fixée au support (2) et présentant une configuration déformée en flexion de sorte à retenir l'au moins une unité (1) dans la première position, et dans lequel l'au moins un élément fusible est configuré pour maintenir la lame ressort (46) dans la configuration déformée en dessous de la température de fusion.

12. Système selon la revendication précédente, dans lequel l'au moins une unité (1) comprend une face avant (13) en regard d'une face du support (2) dans la première position, une face arrière (14) opposée à la première face et une paroi latérale (17) joignant la face avant et la face arrière, la paroi latérale (17) comprenant un retrait (15), la lame ressort (46) comportant une saillie (321) insérée dans le retrait (15) dans la configuration déformée.

13. Système selon l'une quelconque des revendications précédentes, dans lequel le dispositif de rétention (4) comprend un élément fusible configuré pour solidariser l'au moins une unité au support (2) dans la première position.

14. Système selon l'une des revendications 1 à 9, comprenant une enveloppe (16) au sein de laquelle l'au moins une unité (1) est placée au moins dans la première position, le dispositif de rétention (4) comprenant au moins une lame ressort (46) fixée au support (2) et présentant une configuration déformée en flexion de sorte à retenir l'enveloppe (16) dans la première position, et dans lequel l'au moins un élément fusible est configuré pour maintenir la lame ressort (46) dans la configuration déformée en dessous de la température de fusion.

15. Système selon l'une quelconque des revendications précédentes, dans lequel l'au moins une unité (1) est désolidarisée du support (2) lors du déplacement relatif de la première position à la deuxième position, système de préférence dans lequel la deuxième position est configurée pour produire un découplage thermique total entre l'unité (1) et le support (2) et/ou au moins une autre unité.

16. Système selon l'une quelconque des revendications précédentes, dans lequel le support (2) comprend un circuit imprimé.

17. Appareil comprenant au moins un système selon l'une quelconque des revendications précédentes, le système étant configuré pour permettre à la gravité de déplacer l'unité (1) lorsque le dispositif de rétention (4) ne s'oppose plus à la force de poussée.

## Patentansprüche

1. System, umfassend:
• mindestens eine Einheit (1),
• einen Träger (2), der dazu konfiguriert ist, mindestens eine Einheit (1) in abnehmbarer Weise mindestens in einer ersten Position aufzunehmen, in der die mindestens eine Einheit (1) fest mit dem Träger (2) verbunden ist,
- eine elastisch verformbare Vorrichtung, die dazu konfiguriert ist, elastisch in der ersten Position derart verformt zu werden, dass sie eine Schubkraft auf die mindestens eine Einheit (1) in Bezug auf den Träger ausübt,
- eine Haltevorrichtung (4), die mindestens ein schmelzbares Element umfasst, das eine Schmelztemperatur aufweist, wobei die Haltevorrichtung (4) dazu konfiguriert ist, sich der Schubkraft derart entgegenzusetzen, dass die mindestens eine Einheit (1) in der ersten Position gehalten wird, wenn die Temperatur des schmelzbaren Elements unterhalb der Schmelztemperatur ist, und um sich der Schubkraft nicht entgegenzusetzen, wenn die Temperatur des schmelzbaren Elements die Schmelztemperatur derart überschreitet, dass die Schubkraft die mindestens eine Einheit (1) zu einer zweiten Position, die sich von der ersten Position unterscheidet, verschiebt,
System **dadurch gekennzeichnet, dass**:
- die mindestens eine Einheit (1) eine Stromspeichereinheit ist und mit einem ersten Element (11) zur elektrischen Verbindung und einem zweiten Element (12) zur elektrischen Verbindung versehen ist, wobei das System eine elektrische Verbindungsvorrichtung (3) umfasst, die dazu geeignet ist, das erste Element (11) und das zweite Element (12) durch Kontakt elektrisch an den Träger (2) in der ersten Position anzuschließen,
und dass das erste Element (11) und das zweite Element (12) zur elektrischen Verbindung und der Träger (2) ein Kontakt lediglich durch Druck ist.

2. System nach dem vorstehenden Anspruch, wobei die elektrische Verbindungsvorrichtung (3) einerseits ein erstes komplementäres Element (31) zur elektrischen Verbindung umfasst, das dazu geeignet ist, das erste Element (11) an den Träger (2) in der ersten Position anzuschließen, und, andererseits, ein zweites komplementäres Element (32) zur elektrischen Verbindung, das dazu geeignet ist, das zweite Element an dem Träger (2) in der ersten Position anzuschließen.

3. System nach dem vorstehenden Anspruch, wobei die elastisch verformbare Vorrichtung mindestens zum Teil aus mindestens einem Abschnitt mindestens eines des ersten Elements (11), des zweiten Elements (12), des ersten komplementären Elements (31) und des zweiten komplementären Elements (32) gebildet ist.

4. System nach einem der Ansprüche 1 bis 3, wobei die Verschiebung von der ersten Position zu der zweiten Position ein Entfernen nach sich zieht, das ausreicht, um die Einheit (1) und den Träger (2) elektrisch zu trennen.

5. System nach einem der vorstehenden Ansprüche, wobei das mindestens eine schmelzbare Element elektrisch isolierend ist.

6. System nach einem der vorstehenden Ansprüche, wobei das mindestens eine schmelzbare Element eine Schmelztemperatur zwischen 60 °C und 120 °C aufweist.

7. System nach einem der vorstehenden Ansprüche, wobei das mindestens eine schmelzbare Element auf Polyolefin basiert.

8. System nach einem der vorstehenden Ansprüche, wobei die elastisch verformbare Vorrichtung mindestens eine Blatt- oder Spiralfeder umfasst.

9. System nach einem der vorstehenden Ansprüche, wobei die Haltevorrichtung (4) einen Draht (43) umfasst, der in der ersten Position um die mindestens eine Einheit (1) gespannt ist, wobei der Draht (43) mindestens zum Teil aus schmelzbarem Material besteht und/oder an dem Träger durch mindestens ein schmelzbares Element befestigt ist.

10. System nach einem der vorstehenden Ansprüche, das eine Verschiebungsführung (20) der mindestens einen Einheit (1) von der ersten Position zu der zweiten Position umfasst, wobei mindestens ein schmelzbares Element auf einer Verschiebungsbahn der mindestens einen Einheit (1) in der Führung (20) positioniert ist.

11. System nach einem der vorstehenden Ansprüche, wobei die Haltevorrichtung (4) mindestens eine Blattfeder (46) umfasst, die an dem Träger (2) befestigt ist und eine in Biegung derart verformte Konfiguration aufweist, dass sie die mindestens eine Einheit (1) in der ersten Position hält, und wobei das mindestens eine schmelzbare Element dazu konfiguriert ist, die Blattfeder (46) unterhalb der Schmelztemperatur in der verformten Konfiguration zu halten.

12. System nach dem vorstehenden Anspruch, wobei die mindestens eine Einheit (1) eine Vorderseite (13) umfasst, die einer Seite des Trägers (2) in der ersten Position gegenüberliegt, eine Rückseite (14), die der ersten Seite entgegengesetzt ist, und eine Seitenwand (17), die die Vorderseite und die Rückseite verbindet, wobei die Seitenwand (17) einen Rücksprung (15) umfasst, die Blattfeder (46) einen Vorsprung (321), der in den Rücksprung (15) in der verformten Konfiguration eingefügt ist, umfasst.

13. System nach einem der vorstehenden Ansprüche, wobei die Haltevorrichtung (4) ein schmelzbares Element umfasst, das dazu konfiguriert ist, die mindestens eine Einheit fest mit dem Träger (2) in der ersten Position zu verbinden.

14. System nach einem der Ansprüche 1 bis 9, das einen Mantel (16) umfasst, in dem die mindestens eine Einheit (1) mindestens in der ersten Position platziert ist, wobei die Haltevorrichtung (4) mindestens eine Blattfeder (46) umfasst, die an dem Träger (2) befestigt ist und eine in Biegung verformte Konfiguration derart aufweist, dass der Mantel (16) in der ersten Position gehalten wird, und wobei das mindestens eine schmelzbare Element dazu konfiguriert ist, die Blattfeder (46) unterhalb der Schmelztemperatur in der verformten Konfiguration zu halten.

15. System nach einem der vorstehenden Ansprüche, wobei die mindestens eine Einheit (1) von dem Träger (2) bei der relativen Verschiebung von der ersten Position zu der zweiten Position gelöst ist, wobei das System in der zweiten Position bevorzugt dazu konfiguriert ist, eine vollständige thermische Entkopplung zwischen der Einheit (1) und dem Träger (2) und/oder mindestens einer anderen Einheit zu ergeben.

16. System nach einem der vorstehenden Ansprüche, wobei der Träger (2) eine gedruckte Leiterplatte umfasst.

17. Gerät, das mindestens ein System nach einem der vorstehenden Ansprüche umfasst, wobei das System dazu konfiguriert ist, es der Schwerkraft zu erlauben, die Einheit (1) zu verschieben, wenn sich die Haltevorrichtung (4) der Schubkraft nicht mehr entgegensetzt.

## Claims

1. System comprising:
• at least one unit (1),
• a support (2) configured to receive the at least one unit (1) removably at least in one first position, wherein the at least one unit (1) is secured to the support (2),
- an elastically deformable device configured to be elastically deformed in the first position, so as to exert a thrust force on the at least one unit (1) relative to the support,
- a retaining device (4) comprising at least one fuse element having a melting point, the retaining device (4) being configured to oppose the thrust force so as to maintain the at least one unit (1) in the first position when the temperature of the fuse element is below the melting point, and to not oppose the thrust force when the temperature of the fuse element crosses the melting point such that the thrust force moves the at least one unit (1) to a second position different from the first position, the system being **characterised:**
- **in that** the at least one unit (1) is an electrical energy storage unit and is provided with a first electrical connecting element (11) and a second electrical connecting element (12), the system comprising an electrical connecting device (3), capable of electrically connecting by contact, the first element (11) and the second element (12) to the support (2) in the first position,
- and **in that** the contact between the first electrical connecting element (11) and the second electrical connecting element (12) and the support (2) is a pressure contact only.

2. System according to the preceding claim, wherein the electrical connecting device (3) comprises, on the one hand, a first complementary electrical connecting element (31) capable of electrically connecting the first element (11) to the support (2) in the first position and, on the other hand, a second complementary electrical connecting element (32) capable of electrically connecting the second element to the support (2) in the first position.

3. System according to the preceding claim, wherein the elastically deformable device is formed at least partially by at least one portion of at least one from among the first element (11), the second element (12), the first complementary element (31) and the second complementary element (32).

4. System according to one of claims 1 to 3, wherein the movement from the first position to the second position leads to a sufficient distance to electrically disconnect the unit (1) and the support (2).

5. System according to any one of the preceding claims, wherein the at least one fuse element is electrically insulating.

6. System according to any one of the preceding claims, wherein the at least one fuse element has a melting point of between 60°C and 120°C.

7. System according to any one of the preceding claims, wherein the at least one fuse element is polyolefin-based.

8. System according to any one of the preceding claims, wherein the elastically deformable device comprises at least one leaf spring or coil spring.

9. System according to any one of the preceding claims, wherein the retaining device (4) comprises a wire (43) which, in the first position, is stretched around the at least one unit (1), the wire (43) being at least partially made of fuse material and/or fixed to the support by at least one fuse element.

10. System according to any one of the preceding claims, comprising a guide (20) for translating the at least one unit (1) from the first position to the second position, at least one fuse element being positioned on a trajectory for translating the at least one unit (1) in the guide (20).

11. System according to any one of the preceding claims, wherein the retaining device (4) comprises at least one leaf spring (46) fixed to the support (2) and having a bent, deformed configuration so as to retain the at least one unit (1) in the first position, and wherein the at least one fuse element is configured to maintain the leaf spring (46) in the deformed configuration below the melting point.

12. System according to the preceding claim, wherein the at least one unit (1) comprises a front face (13) facing a face of the support (2) in the first position, a rear face (14) opposite the first face and a side wall (17) joining the front face and the rear face, the side wall (17) comprising an indentation (15), the leaf spring (46) comprising a projection (321) inserted in the indentation (15) in the deformed configuration.

13. System according to any one of the preceding claims, wherein the retaining device (4) comprises a fuse element configured to secure the at least one unit to the support (2) in the first position.

14. System according to one of claims 1 to 9, comprising an envelope (16) within which the at least one unit (1) is placed at least in the first position, the retaining device (4) comprising at least one leaf spring (46) fixed to the support (2) and having a bent, deformed configuration so as to retain the envelope (16) in the first position, and wherein the at least one fuse element is configured to maintain the leaf spring (46) in the deformed configuration below the melting point.

15. System according to any one of the preceding claims, wherein the at least one unit (1) is disconnected from the support (2) during the relative movement from the first position to the second position, system preferably wherein the second position is configured to produce a total thermal uncoupling between the unit (1) and the support (2) and/or at least one other unit.

16. System according to any one of the preceding claims, wherein the support (2) comprises a printed circuit.

17. Appliance comprising at least one system according to any one of the preceding claims, the system being configured to enable gravity to move the unit (1) when the retaining device (4) no longer opposes the thrust force.
